(19) Europäisches Patentamt
European Patent Office
Office européen des brevets

(11) EP 1 848 754 B1

(12) **EUROPEAN PATENT SPECIFICATION**

(45) Date of publication and mention of the grant of the patent:
**04.06.2008 Bulletin 2008/23**

(21) Application number: **06706642.3**

(22) Date of filing: **04.02.2006**

(51) Int Cl.:
***C08G 59/62*** *(2006.01)* ***C08L 63/00*** *(2006.01)*
***C08K 5/04*** *(2006.01)*

(86) International application number:
**PCT/EP2006/000982**

(87) International publication number:
**WO 2006/087111 (24.08.2006 Gazette 2006/34)**

(54) **LOW SHRINKAGE AMINE-CURING EPOXY RESIN COMPOSITIONS COMPRISING A LACTONE**

AMINHÄRTENDE EPOXIDHARZZUSAMMENSETZUNGEN MIT EINEM LACTON MIT GERINGER SCHWINDUNG

COMPOSITIONS A FAIBLE RETRAIT A BASE DE RESINE EPOXY CONTENANT UN AGENT DURCISSEUR AMINE ET COMPORTANT UNE LACTONE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.02.2005 EP 05003513**

(43) Date of publication of application:
**31.10.2007 Bulletin 2007/44**

(73) Proprietor: **HENKEL KOMMANDITGESELLSCHAFT AUF AKTIEN
40589 Düsseldorf (DE)**

(72) Inventors:
- **UENISHI, Kazuya
Nara 638-0833 (JP)**
- **HORIKIRI, Masashi
Yokohama-Shi,
Kanagawa 236-0055 (JP)**
- **SUDO, Atsushi
Tokyo 177-0044 (JP)**
- **ENDO, Takeshi
Yokohama 220-0006 (JP)**

(56) References cited:
**EP-A- 0 687 697** **US-A1- 2003 105 191**

- **DATABASE WPI Section Ch, Week 198411 Derwent Publications Ltd., London, GB; Class A21, AN 1984-065135 XP002379589 -& JP 59 020371 A (TOYO INK MFG CO) 2 February 1984 (1984-02-02)**
- **DATABASE WPI Section Ch, Week 198703 Derwent Publications Ltd., London, GB; Class A21, AN 1987-018120 XP002379590 -& JP 61 276239 A (KYOCERA CORP) 6 December 1986 (1986-12-06)**
- **DATABASE WPI Section Ch, Week 200426 Derwent Publications Ltd., London, GB; Class A21, AN 2004-272592 XP002379591 -& JP 2003 238659 A (TORAY IND INC) 27 August 2003 (2003-08-27) cited in the application**
- **DATABASE WPI Section Ch, Week 199934 Derwent Publications Ltd., London, GB; Class A21, AN 1999-400302 XP002379592 & JP 11 158350 A (HITACHI CHEM CO LTD) 15 June 1999 (1999-06-15) cited in the application**
- **DATABASE WPI Section Ch, Week 198617 Derwent Publications Ltd., London, GB; Class A85, AN 1986-110956 XP002379808 -& JP 61 054653 A (KYOCERA CORP) 18 March 1986 (1986-03-18)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 848 754 B1

## Description

## BACKGROUND OF THE INVENTION

### Field of the Invention

The present invention relates to the use of 6-membered aromatic lactones to reduce shrinkage of amine-cured epoxy compositions and compositions containing such lactones.

### Brief Description of the State of the Technology

Compositions containing amine-type-hardeners, such as tertiary amines or imidazole-type amines, are frequently used or at least considered in semiconductor package and assembly applications, such as flip chip and chip scale package underfills.

However, these compositions suffer from their volume shrinkage during curing reactions, up to levels as high as 4% shrinkage. The volume shrinkage during the curing reaction causes the formation of voids and micro-cracks in the cured material, and thus results in lowering the mechanical strength of the material. Especially in such semiconductor package and assembly applications, shrinkage causes contact failure between the adhesive and the substrate, thus leading to adhesion failure. More importantly, however, moisture can reach the surface of the substrate through voids and cracks, damaging the semiconductor chip and other components.

The problem of volume shrinkage has been conventionally solved by the addition of inorganic fillers. However, addition of fillers to curable composition frequently results in an increase in viscosity and thus reduces fluidity. Such viscosity increase can affect dispensing of the compositions. And some fillers have abrasive qualities, which may adversely affect the surface of the semiconductor chip and/or circuit board or carrier substrate to which the semiconductor is to be attached. Moreover, the addition of fillers may affect certain physical properties of the cured composition, such as by decreasing mechanical strength and consequently adhesion strength.

One proposed solution to the problem of volume shrinkage has been the addition of shrinkage suppressive monomers as co-monomers in the composition. However, most of the shrinkage suppressive monomers are not suitable for amine-catalyzed curing reactions of epoxy monomers, because they do not react randomly under conventional reaction conditions or they decompose under those reaction conditions.

Japanese Patent Document No. JP 2003-238659 ("JP ’659") describes the addition of a lactone to an epoxy resin in the presence of a tertiary amine to control an early elevation in viscosity.

Japanese Patent Document No. JP11-158350 ("JP ’350) discloses a composition similar to that described in JP ’659, and its use as an electronic chip bonder. The purpose of the addition of the lactone here appears to be to control viscosity, suppress reactivity and provide a longer pot life.

Despite JP ’659 and JP ’350 there remains a need to combat volume shrinkage in amine-cured epoxy compositions.

## SUMMARY OF THE INVENTION

The inventors have studied the influence of a variety of lactones on the copolymerization of epoxides in the presence of amines, and found that most of the lactones studied did not undergo random copolymerization with epoxide monomers and did not show any sufficient shrinkage-suppression effect.

Therefore the inventors found it highly surprising that 6-membered (hetero)aromatic lactones undergo random copolymerization with epoxides effectively and were able to provide amine-curing epoxy compositions with the desired shrinkage-suppression effect.

To overcome the volume-shrinkage problems of amine-curing epoxy formulations, at least one lactone compound comprising a 6-membered lactone ring, such as a 6-membered lactone condensed to an aromatic or heteroaromatic moiety, has been added to compositions containing an epoxy resin and an amine curative to act as shrinkage-suppressing agent.

These 6-membered lactones condensed to an aromatic or heteroaromatic moiety are referred to as "Lactones (I)".

Preferably the aromatic or heteroaromatic moiety of lactones (I) according to the present invention is a 5- to 7-membered, more preferably a 6-membered aromatic or heteroaromatic ring, wherein the hetero atom or hetero atoms in the heteroaromatic ring are preferably selected from nitrogen, oxygen and/or sulfur.

6-membered lactone moieties may also be condensed to neighboring carbon atoms of the aromatic or heteroaromatic moiety, building bifunctional lactones as e.g. the bifunctional lactone "BL". See Marx. J. N. et al., J. Heterocyclic Chem., 12(2), 417 (1975).

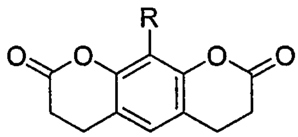

bifunctional lactone
**BL** (R=H, Me)

Examples of 5-membered aromatic or 5-membered heteroaromatic moieties condensed to the 6-membered lactone moiety include for instance the furan moiety, the thiophene moiety or the pyrrole moiety.

Examples of 6-membered aromatic or 6-membered heteroaromatic moieties condensed to the 6-membered lactone moiety include for instance the benzene moiety or the pyridine moiety. Particularly preferred is the benzene moiety.

The aromatic or heteroaromatic moieties as well as the 6-membered lactone moiety itself can be further substituted by one or more straight chain or branched alkyl groups having 1 to 20 carbon atoms, preferably 1 to 12, most preferably 1 to 6 carbon atoms, like e.g. methyl, ethyl or propyl groups. Further substituents may be chosen from hydroxy, aryl, alkaryl or aralkyl groups, with preferably 6 to 20 carbon atoms, which can be directly bound to the aromatic or heteroaromatic moieties or 6-membered lactone moiety, or which can also be bound to those moieties by bridging atoms or bridging groups, like -O-, -S-, -(CO)-, -O-(CO)- or-(CO)-O-.

Most preferable lactones (I) are those condensed to a benzene moiety as the aromatic moiety, and can be described by the following general formula:

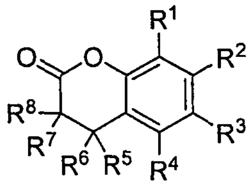

where

$R^1$, $R^2$, $R^3$, $R^4$, $R^5$, $R^6$, $R^7$ and $R^8$ are independently same or different and denote
hydrogen; hydroxyl;
a straight chain or branched alkyl group having 1 to 20 carbon atoms, preferably 1 to 12, most preferably 1 to 6 carbon atoms, like e.g. methyl, ethyl or propyl groups; aryl, alkaryl or aralkyl groups, with preferably 6 to 20 carbon atoms, which can be directly bound to the aromatic or heteroaromatic moieties or 6-membered lactone moiety, or which can also be bound to those moieties by bridging atoms or bridging groups, like e.g. -O-, -S-, -(CO)-, -O-(CO)- or -(CO)-O-; and/or
neighboring residues;
$R^1$ and $R^2$; or $R^2$ and $R^3$; or $R^3$ and $R^4$ form 6-membered lactone moieties.

Such compounds can be understood as dihydrocoumarins, whereby this term includes dihydrocoumarin itself and its derivatives.

Most preferably $R^5$, $R^6$, $R^7$ and $R^8$ denote for hydrogen.

Further, any one of residues $R^1$, $R^2$, $R^3$ or $R^4$ may serve as an aliphatic, cycloaliphatic or aromatic "bridging group" to another lactone (I), as exemplified for residue $R^2$ below:

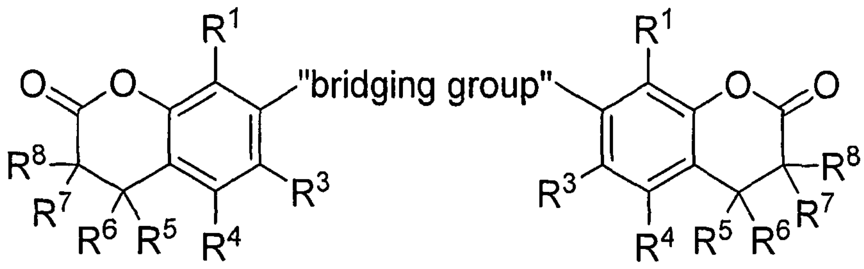

Examples for bridging groups include -alkylene-, -phenylene-, -O-alkylene-O-, -O-phenylene-O-, -O-CO-alkylene-CO-O- , -O-CO-phenylene-CO-O-, -O-CO-NH-alkylene-NH-CO-O-, or -O-CO-NH-phenylene-NH-CO-O-groups, whereby any of the alkylene or phenylene groups can be further substituted, preferably by alkyl groups with 1 to 4 carbon atoms.

Scheme 1 shows only a few of a variety of possible structures of suitable lactones (I).

Scheme 1

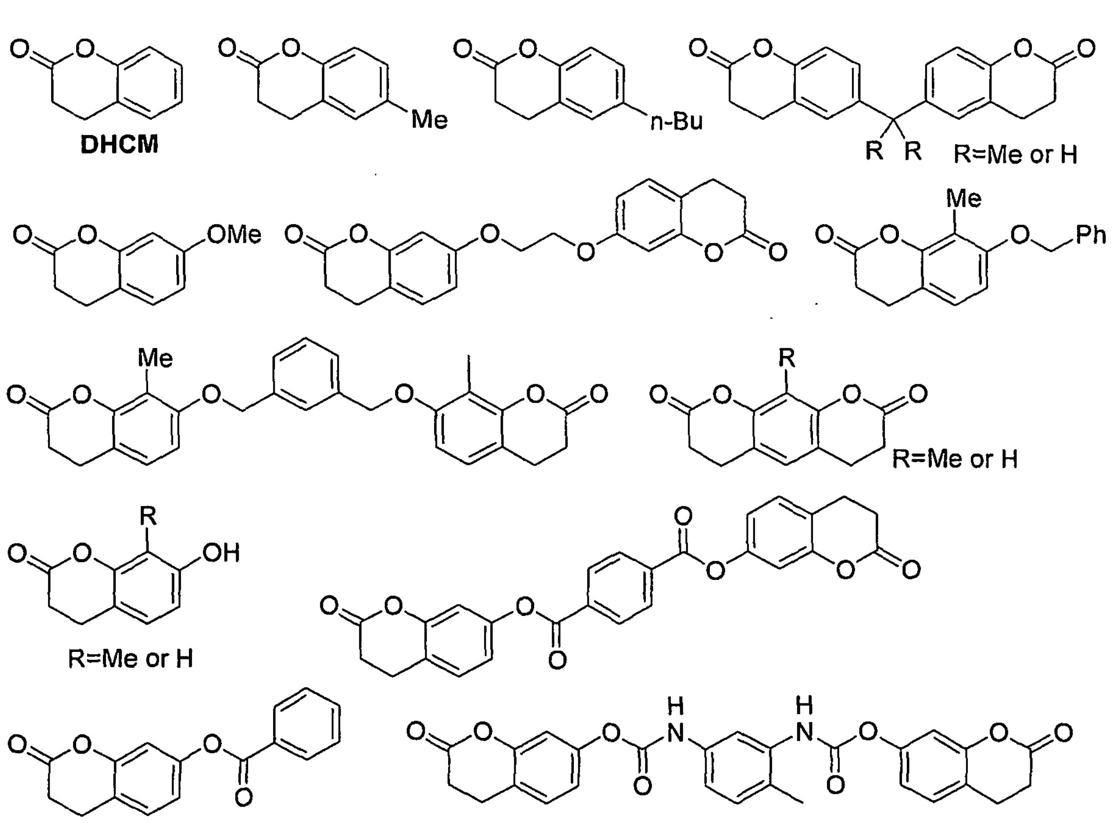

DHCM

R=Me or H

R=Me or H

R=Me or H

AMINE-CURING EPOXY COMPOSITIONS

The invention further provides amine-curing epoxy compositions according to claims 10 to 19. As set forth in those claims, the composition of the present invention comprises besides the lactone component at least one epoxy component (II), and at least one amine curative or hardener (III).

The lactone component undergoes copolymerization with the epoxy component (II) through efforts the amine-type hardener (III) by way of exposure to elevated temperature conditions as described below.

The invention is not limited to any specific epoxy component. In general all epoxy components used in amine-hardening epoxy compositions are suitable to be used in the compositions of the present invention.

Preferable examples of suitable epoxy components (II) are any common epoxy resin, a portion of which is a multifunctional epoxy resin, i.e. an epoxy resin with more than one, for instance two or more epoxy groups. Examples of such epoxy resins include $C_4$-$C_{28}$ alkyl glycidyl ethers; $C_2$-$C_{28}$ alkyl- and alkenyl-glycidyl esters; $C_1$-$C_{28}$ alkyl-, mono- and poly-phenol glycidyl ethers; polyglycidyl ethers of pyrocatechol, resorcinol, hydroquinone, 4,4'-dihydroxydiphenyl methane (or bisphenol F, such as RE-404-S or RE-410-S available commercially from Nippon Kayuku, Japan), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphyenyl)methane; polyglycidyl ethers of transition metal complex chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N,N'-diglycidyl-4-aminophenyl glycidyl ether; N,N,N',N'-tetraglycidyl-1,3-propylene bis-4-aminobenzoate; phenol novolac epoxy resin; cresol novolac epoxy resin; and combinations thereof.

Among the commercially available epoxy resins suitable for use herein are polyglycidyl derivatives of phenolic compounds, such as those available under the tradenames EPON 828, EPON 1001, EPON 1009, and EPON 1031, from Shell Chemical Co.; DER 331, DER 332, DER 334, and DER 542 from Dow Chemical Co.; GY285 from Ciba Specialty Chemicals, Tarrytown, New York; and BREN-S from Nippon Kayaku, Japan. Other suitable epoxy resins include polyepoxides prepared from polyols and the like and polyglycidyl derivatives of phenolformaldehyde novolacs, the latter of which are available commercially under the tradenames DEN 431, DEN 438, and DEN 439 from Dow Chemical Company. Cresol analogs are also available commercially ECN 1235, ECN 1273, and ECN 1299 from Ciba Specialty Chemicals. SU-8 is a bisphenol A-type epoxy novolac available from Shell Chemicals (formerly, Interez, Inc.). Polyglycidyl adducts of amines, aminoalcohols and polycarboxylic acids are also useful in this invention, commercially available resins of which include GLYAMINE 135, GLYAMINE 125, and GLYAMINE 115 from F.I.C. Corporation; ARALDITE MY-720, ARALDITE MY-721, ARALDITE 0500, and ARALDITE 0510 from Ciba Specialty Chemicals and PGA-X and PGA-C from the Sherwin-Williams Co. And of course combinations of the different epoxy resins are also desirable for use herein.

As noted above, the epoxy resin component of the present invention preferably includes any common epoxy resin, at least a portion of which is a multifunctional epoxy resin. Ordinarily, the multifunctional epoxy resin should be included in an amount within the range of preferably about 20 weight percent to preferably about 100 weight percent of the epoxy resin component.

A monofunctional epoxy resin, if present, should ordinarily be used as a reactive diluent, or crosslink density modifier. In the event such a monofunctional epoxy resin is included as a portion of the epoxy resin component, such resin should be employed in an amount of preferably up to about 20 weight percent, based on the total epoxy resin component.

Preferable epoxy compounds (II), can be exemplified by the following general formula:

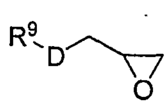

where

D denotes an oxygen or

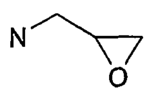

and $R^9$ is selected from the group consisting of a straight-chain or branched alkyl group with 1 to 18 carbon atoms; an aromatic or heteroaromatic group with 4 to 12 carbon atoms; a group with the structure

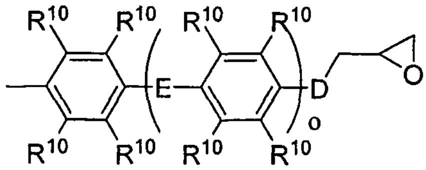

where all $R^{10}$ within the group are same or different and independently denote hydrogen or an alkyl group with 1 to 4 carbon atoms,

and o is 0 or 1,

and E is selected from a carbon-carbon single bond and $CR^{11}_2$ wherein $R^{11}$ is same or different and independently denotes hydrogen or an alkyl group with 1 to 4 carbon atoms; and D is defined as above, or

$R^9$ is a group with the structure $R^{12}$-$SiR^{13}R^{14}R^{15}$ where $R^{13}$ and $R^{14}$ are the same or different, each of which denotes a straight-chain or branched alkoxy residue with 1 to 6 carbon atoms or an aryloxy or aralkyloxy residue,

$R^{15}$ is different or the same as $R^{13}$ or $R^{14}$ or an aliphatic residue, an amino residue, a halogen residue, an aromatic or heteroaromatic residue, or an araliphatic or heteroaraliphatic residue,

$R^{12}$ is a bridging group selected from aliphatic, heteroaliphatic, araliphatic, heteroaraliphatic, aromatic and heteroaromatic groups.

Preferably $R^{13}$, $R^{14}$ and $R^{15}$ are the same or different, and each independently denotes a straight-chain or branched alkoxy residue with 1 to 4 carbon atoms, most preferably a methoxy or ethoxy residue. $R^{12}$ is preferably an alkylene chain with 1 to 6 carbon atoms, more preferably 2 to 4 carbon atoms, and most preferably a propylene group.
In case $R^9$ is a group with the structure $R^{12}$-$SiR^{13}R^{14}R^{15}$, at least two residues selected from $R^{13}$, $R^{14}$ and $R^{15}$ are apt to hydrolyze upon contact with moisture and therefore may form polycondensates.
Examples of such compounds are shown in Scheme 2. Oligomers of these compounds having residual epoxide groups, e.g., oligomers prepared by thermal or ionic oligomerization, by addition reaction with thiol, by addition reaction with carboxylic acid, by addition with carboxylic anhydride, and by addition reaction with amine, can be similarly used.

Scheme 2

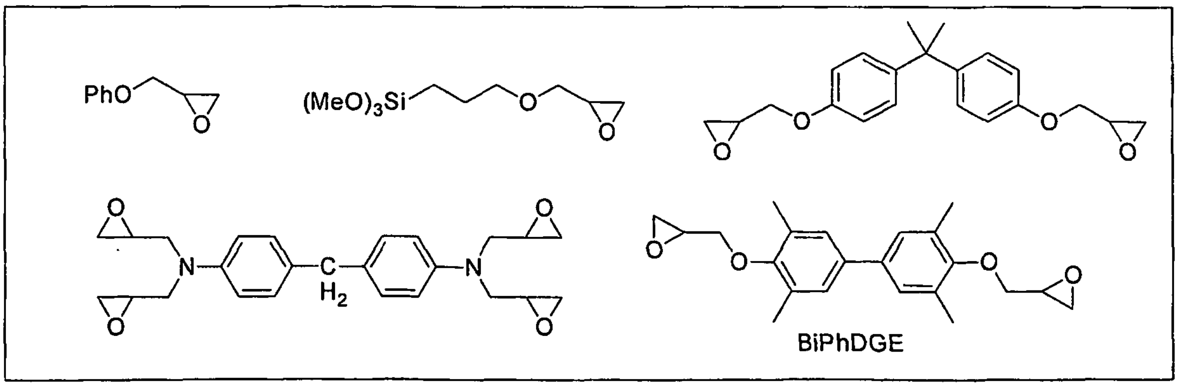

BiPhDGE

There is no restriction in the structure of the suitable amines, and even mixtures of two and more amino compounds can be used. Preferably amine-type hardeners are selected from primary amines, secondary amines and amine catalysts comprising tertiary amines, aromatic amines and heteroaromatic amines.
(1) When the amine-type hardener is an aromatic or heteroaromatic amine, like an imidazole or imidazole derivative (III a) (like an alkylated imidazole), or a tertiary amine (III b) (e.g. a heterocyclic tertiary amine), it can be used

as a catalyst that promotes anionic co-polymerization of epoxide and lactone. $R^{16}$, $R^{17}$ , $R^{18}$ and $R^{19}$ denotes aliphatic or aromatic hydrocarbons. Only $R^{19}$ can also be a hydrogen atom.

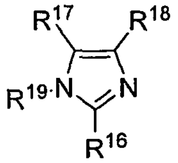

(III a)

$NR^{16}R^{17}R^{18}$

(III b)

In the following only a few more compounds are exemplified. Examples are triethylamine, dimethyl benzylamine, 2,4,6-tris (dimethyl aminomethyl) phenol, pyridine, 4-dimethylaminopyridine, 3-dimethylamino propylamine, 3-diethylaminopropylamine, 3-dibutylaminopropylamine, 2-diethylamino ethylamine, 1-diethylamino-4-aminopentane, N-(3-aminopropyl)-N-methyl propanediamine, 1-(2-aminoethyl) piperazine, 3-(3-dimethylaminopropyl) propylamine, 4-(2-aminoethyl) morpholine, 4-(3-aminopropyl) morpholine, or an imidazole derivative, as e.g. imidazole, 2-methylimidazole, 2-ethylimidazole, 2-undecylimidazole, 2-heptadecylimidazole, 2-phenylimidazole, 1,2-dimethyl imidazole, 2-ethyl-4-methylimidazole, 2-phenyl-4-methylimidazole, 1-benzyl-2-phenylimidazole, 1-benzyl-2-methylimidazole, 1-cyanoethyl-2-methylimidazole or 1-aminoethyl-2-methylimidazole.

Only some of those amine-curing catalysts are shown in Scheme 3.

Scheme 3

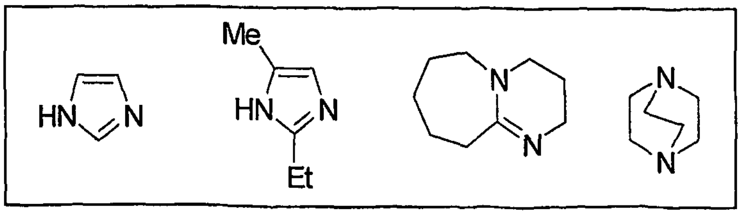

(2) When the amine-type hardener is a primary amine or a secondary amine, it can be used as a stoichiometric hardener, i.e., it is not a catalyst, but its amino groups react with epoxides or lactones to form covalent bond.

Preferable examples for suitable primary amines are e.g. the so-called Jeffamines®, which are polyoxyalkyleneamines. They contain primary amino groups attached to the terminus of a polyether backbone. They are thus "polyether amines". The polyether backbone is based either on propylene oxide (PO), ethylene oxide (EO), or mixed EO/PO. The Jeffamines® comprise monoamines, diamines, and triamines, which are available in a variety of molecular weights.

The most suitable primary amines are:

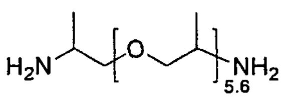

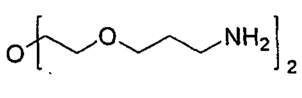

Such amines can also be used in adduct forms, such as epoxy adducts, isocyanate adducts, and carboxylic acid adducts (=amide amine).

When the amine-type hardener is an imidazole- or tertiary amine-type catalyst, the ratio of [epoxy groups (mol)] : [amine catalyst (mol)] is preferably from 99.9 : 0.1 to 80 : 20, more preferably 99 : 1 to 90 : 10. In the case the ratio is higher, curing proceeds insufficiently and unreacted epoxy resin may remain in the resulting cured material. In case the ratio is lower, the polymerization degree of the epoxide may be decreased and the resulting cured material may possess insufficient mechanical strength to be applied as a coating, sealant, or adhesive.

When the amine-type hardener is a primary or secondary amine, the ratio of [epoxy groups (mol)] : [active hydrogen in primary and/or secondary amine groups (mol)] is preferably from 90 : 10 to 30 : 70, .more preferably 75 :

25 to 50 : 50. Out of these ranges, crosslinking reaction may insufficiently proceed, and thus the resulting cured resin may not have enough mechanical strength to be applied as a coating, sealant, or adhesive.

The ratio of [epoxy groups (mol)] : [lactone groups (mol)] is preferably from 99 : 1 to 30 : 70, more preferably 95 : 5 to 60 : 40. In case the ratio is higher, the shrinkage suppression effect may be negligible. In case the ratio is lower, the lactone group may not be completely consumed and remained intact in the resulting cured resin, lowering its mechanical strength.

When amine-type hardener is an imidazole- or tertiary amine-type catalyst, the curing reaction may be carried out at a temperature in the range of 60 °C to 250 °C, more preferably in the range of 100°C to 200 °C.

When the amine-type hardener is a primary or secondary amine, the curing reaction is preferably carried out at a temperature in the range of 0 °C to 200 °C, more preferably in the range of 20 °C to 150 °C.

The present invention further provides the use of the compositions of the present invention in or as for instance sealants, adhesives and coatings.

Suitable substrates on which the compositions can be applied are metals such as steel, aluminum, titanium, magnesium, brass, stainless steel, galvanized steel, like HDG-steel and EG-steel; silicates such as glass and quartz; metal oxides; concrete; wood; electronic chip material, for instance semiconductor chip material; or polymers such as polyimide films and polycarbonate.

The present invention is exemplified in more detail by means of Examples, which follow below.

EXAMPLES

The following abbreviations for the substances used in the examples and comparative examples will be used:

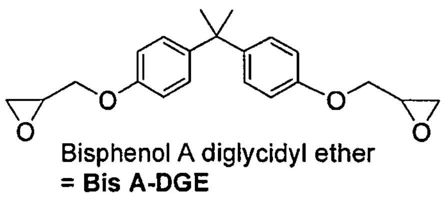

Bisphenol A diglycidyl ether
= **Bis A-DGE**

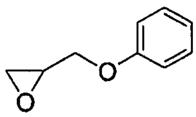

Glycidyl phenyl ether
=**GPE**

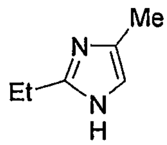

2-Ethyl-4-methylimidazole
=**EMI**

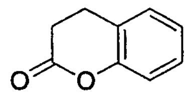

Dihydrocoumarin
= **DHCM**

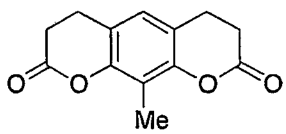

**3**

Example 1-1 (Formulation: Bis A-DGE + DHCM + EMI)

**Preparation of the curable formulation**

Bis-A-DGE (34.0 g, 100 mmol, amount of epoxy group = 200 mmol), DHCM (5.23 g, 35.2 mmol) and EMI (1.28 g, 11.8 mmol) were mixed and degassed under vacuum to obtain the corresponding homogeneous liquid A. The ratio [epoxy group] : [lactone group] : [EMI] = 85 : 15 : 5.

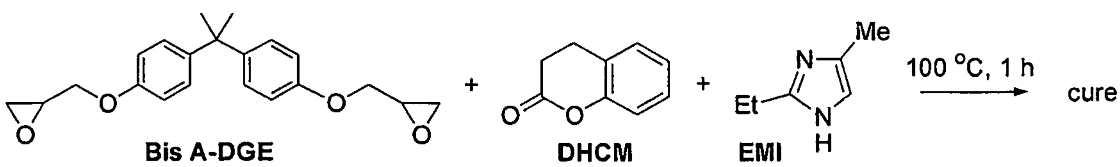


**Bis A-DGE** + **DHCM** + **EMI**

**Curing reaction and shrinkage test**

Approximately 5 g of the obtained mixture A was used to measure its volume by gas-pycnometer. From the weight and the volume of the sample, its density *before* curing (=$D_{before\ curing}$) was calculated. Three independent samples were used for the test, and each sample was tested 5 times to calculate the average density ($D_{before\ curing}$). The density values ranged from 1.1619 g/$cm^3$ to 1.1627 g/$cm^3$ (average = 1.1623 g/$cm^3$). Then, the mixture was transferred into a silicone mold, and was cured at 100°C - 150 °C for 1 h, to obtain a cylinder-shaped cured resin, of which average density ($D_{after\ curing}$; average of 15 times measurement) was measured by gas-pycnometer. Based on the two density values, the degree of volume change was calculated to be 2.1 - 2.3 %, according to the equation:

$$\text{Degree of volume change [\%]} = [(D_{before\ curing})/(D_{after\ curing})-1] \times 100$$

**Adhesion test**

For adhesion test, the adhesive composition was applied on a steel specimen and was cured at 100°C for 1 h. The lapshear strength was 20.8 N/$mm^2$.

The test was carried out according to the ASTM D1002 Apparent Shear Strength of Single-Lap-Joint Adhesively Bonded Metal Specimens by Tension Loading (Metal-to-Metal) making use of a tension testing machine (Model: 4204, manufactured by INSTRON, U.S.A.). The specimens used were grid blasted mild steel lapshear specimens (25.4 x 101.6 x 1.6 mm (TS101)). The test was carried out at 23 °C and 50% relative humidity (RH).

<u>Example 1-2 (Formulation: Bis A-DGE + DHCM-OH + EMI)</u>

Instead of DHCM, DHCM-OH was used. The ratio [epoxy group] : [DHCM-OH] : [EMI] = 85 : 15 : 5. The corresponding tests were those carried out for the Example 1-1.

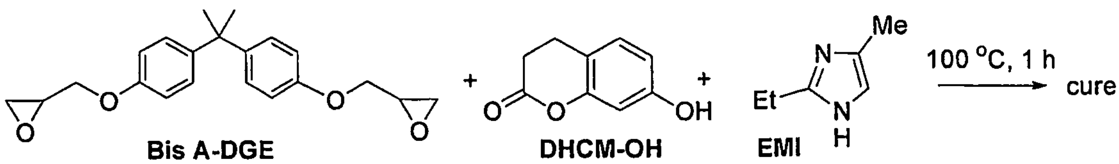


<u>Example 1-3 (Formulation: Bis A-DGE + DHCM-OBn +EMI)</u>

The example was carried out like Example 1-1 with the following differences: Instead of DHCM, DHCM-OBn was used. Molar ratio [epoxy group] : [DHCM-OBn] : [EMI] = 85 : 15 : 5. The corresponding tests were those carried out for the Example 1-1. The corresponding data are listed in Table 1.

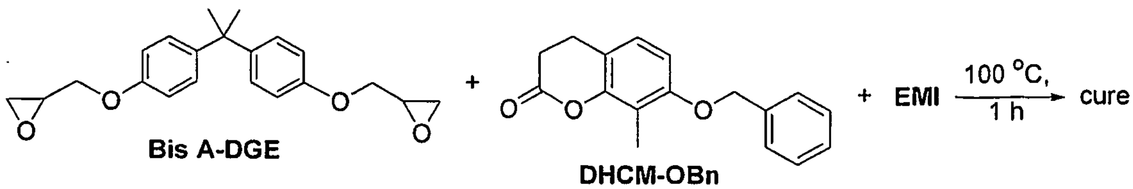


<u>Example 1-4 (Formulation: Bis A-DGE + p-Me-DHCM +EMI)</u>

The example was carried out like Example 1-1 with the following differences: Instead of DHCM, p-Me-DHCM was used. Molar ratio [epoxy group] : [p-Me-DHCM] : [EMI] = 85 : 15 : 5. The corresponding tests were those carried out for the Example 1-1. The corresponding data are listed in Table 1.

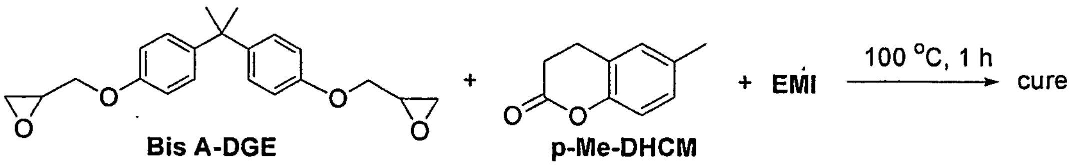

Bis A-DGE + p-Me-DHCM + EMI

Comparative Example 1-1 (Formulation: Bis A-DGE + ε-caprolactone + EMI)

Instead of DHCM-chemistry, the monofunctional lactone ε-caprolactone (CL) was used. The ratio [epoxy group] : [CL] : [EMI] = 85 : 15 : 5.

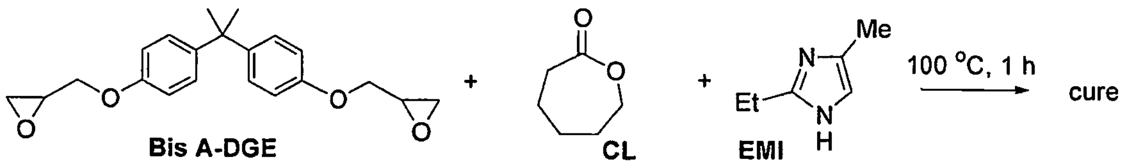

Bis A-DGE + CL + EMI

Comparative Example 1-2 (Formulation: Bis A-DGE + ε-valerolactone + EMI)

Instead of DHCM-chemistry, the monofunctional lactone ε-valerolactone (VL) was used. The ratio [epoxy group] : [VL] : [EMI] = 85 : 15 : 5.

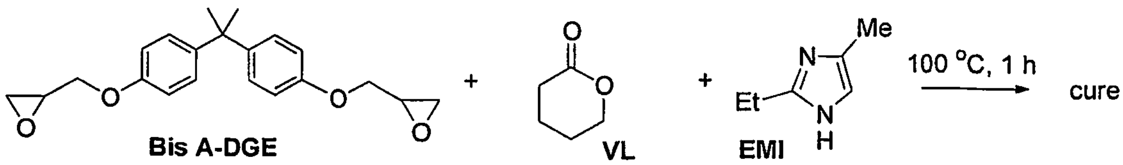

Bis A-DGE + VL + EMI

Comparative Example 1-3 (Formulation: Bis A-DGE + GPE + EMI)

Instead of DHCM-chemistry, the monofunctional epoxide GPE was used. The ratio [epoxy group of Bis A-DGE] : [epoxy group of GPE] : [EMI] = 85 : 15 : 5.

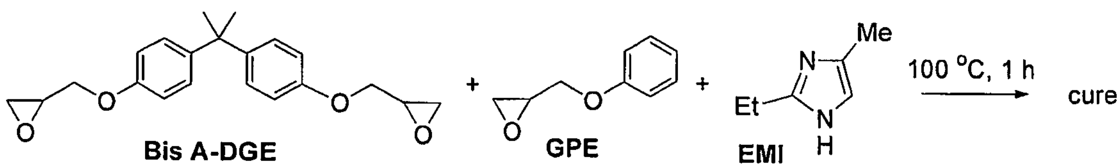

Bis A-DGE + GPE + EMI

The data for Example 1-1 and 1-2, and Comparative Examples 1-1, 1-2 and 1-3 are shown in Table 1. The data for Example 1-3 and 1-4 are shown in Table 1-2.

Table 1. Properties of the curable formulations (cured at 100 °C for 1 h)

| | Example 1-1 | Example 1-2 | Comp.Ex. 1-1 | Comp.Ex. 1-2 | Comp.Ex. 1-3 |
|---|---|---|---|---|---|
| $D_{before}$ (g/mL) | 1.159 | 1.181 | 1.142 | 1.152 | 1.148 |
| $D_{after}$ (g/mL) | 1.187 | 1.205 | 1.175 | 1.186 | 1.186 |
| volume shrinkage (%) | 2.4 | 2.0 | 2.9 | 3.0 | 3.3 |
| $Td_{10}$ | 410 °C | 406 °C | | | 413 °C |
| Tg | 137 °C | 154 °C | | | 119 °C |
| Adhesion strength | 20.8-21.8 MPa | | | | 11.1-13.7 MPa |

Table 1-2. Properties of the curable formulations (cured at 100 °C for 1 h)

| | Example 1-3 | Example 1-4 |
|---|---|---|
| $D_{before}$ (g/mL) | 1.169 | 1.169 |
| $D_{after}$ (g/mL) | 1.193 | 1.195 |
| volume shrinkage (%) | 2.1 | 2.2 |
| $Td_{10}$ | 404 °C | 410°C |
| Tg | 129 °C | 115°C |

Examples 1-1 and 1-2, making use of DHCM-chemistry show very good results concerning volume shrinkage. Comparative Example 1-3, which does not contain any lactone, but a monofunctional epoxy compound, shows a volume shrinkage being increased by 37.5 % and 65 % in relative numbers compared to Examples 1-1 and 1-2, respectively. Comparative Examples 1-1 and 1-2, containing 7- and 6-membered lactones, which are not condensed to aromatic or heteroaromatic moieties, still show a relative increase of volume shrinkage being 20.8 and 25.0 %, respectively, in relative numbers compared to Example 1-1, and 45 and 50 %, respectively, in relative numbers compared to Example 1-2.

The shrinkage values in Example 1-3 and Example 1-4 which are compiled in table 1-2 are comparable to those in the Example 1-1 and Example 1-2. This supports that the DHCM-chemistry reveals excellent shrinkage suppression effects.

In further examples another test system was used:

Example 1-5 (Formulation: Bis F-DGE + DHCM + EMI)

Instead of Bis A-DGE in the example 1-1, Bis F-DGE was used. Molar ratio [epoxy group of Bis F-DGE] : [DHCM] : [EMI] = 85 : 15 : 5. The corresponding tests were those carried out for the Example 1-1. The corresponding data are listed in Table 1-3.

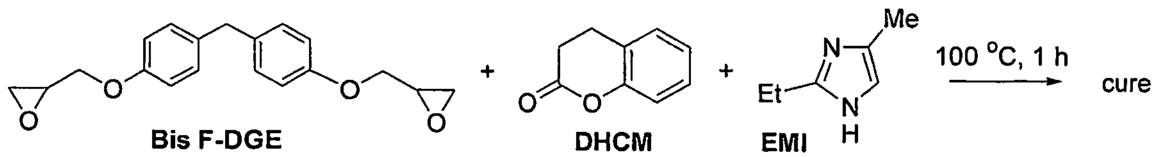


Comparative 1-4 (Formulation: Bis F-DGE + GPE + EMI)

Instead of Bis A-DGE in the comparative example 1-3, Bis F-DGE was used. Molar ratio [epoxy group of Bis F-DGE] : [epoxy group of GPE] : [EMI] = 85 : 15 : 5. The corresponding tests were those carried out for the Example 1-1. The corresponding data are listed in Table 1-3.

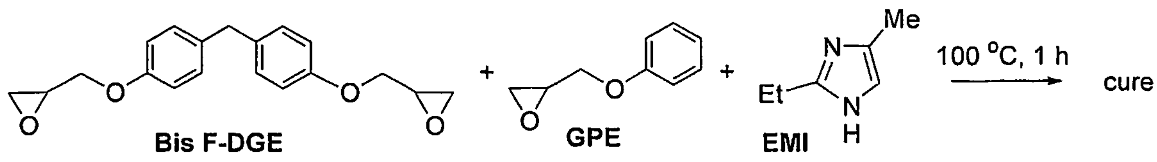


Bis F-DGE GPE EMI

Table 1-3. Properties of the curable formulations (cured at 100 °C for 1 h)

| | Example 1-5 | Comparative Example 1-4 |
|---|---|---|
| $D_{before}$ (g/mL) | 1.189 | 1.175 |
| $D_{after}$ (g/mL) | 1.229 | 1.233 |
| volume shrinkage (%) | 3.2 | 4.7 |
| $Td_{10}$ | 415 °C | 415 °C |
| Tg | 120 °C | 99 °C |

This example 1-5 also supports that DHCM-chemistry has clear advantages over GPE.

Example 2

BisA-DGE (8.93 g, 26.2 mmol, amount of epoxy group = 52.4 mmol) and 3 (1.58 g, 6.80 mmol, amount of lactone group=13.6 mmol) was mixed with stirring and with evacuation. The mixture was heated at 100 °C to obtain a homogeneous mixture A (approximately 10 min). BisA-DGE (4.17 g, 12.2 mmol, amount of epoxy group=24.4 mmol) and EMI (0.55 g, 5.0 mmol; 4.5 mol% of $[\text{epoxy group}]_0$+$[\text{lactone group}]_0$) was mixed with stirring and with evacuation to obtain a mixture B. After cooling the mixture A to room temperature, the mixture B was added, and stirred with evacuation to obtain the adhesive composition as a homogeneous liquid. Curing reaction and shrinkage test were carried out as for Example 1-1.

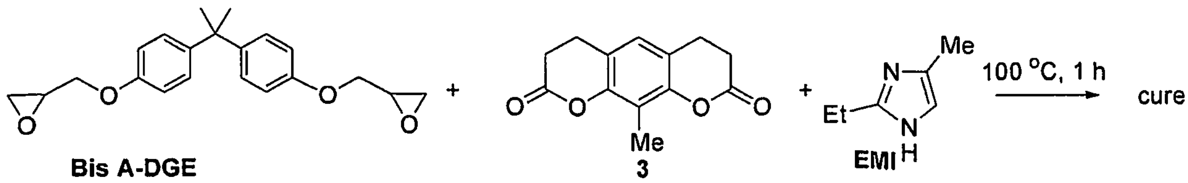


Bis A-DGE 3 EMI

Example 2-2 (Formulation: Bis A-DGE + m-Bis-DHCM +EMI)

Instead of 3 in the Example 2, m-Bis-DHCM was used. Molar ratio [epoxy group] : [lactone group] : [EMI] = 85 : 15 : 5. The corresponding tests were those carried out for the Example 2. The corresponding data are listed in Table 2.

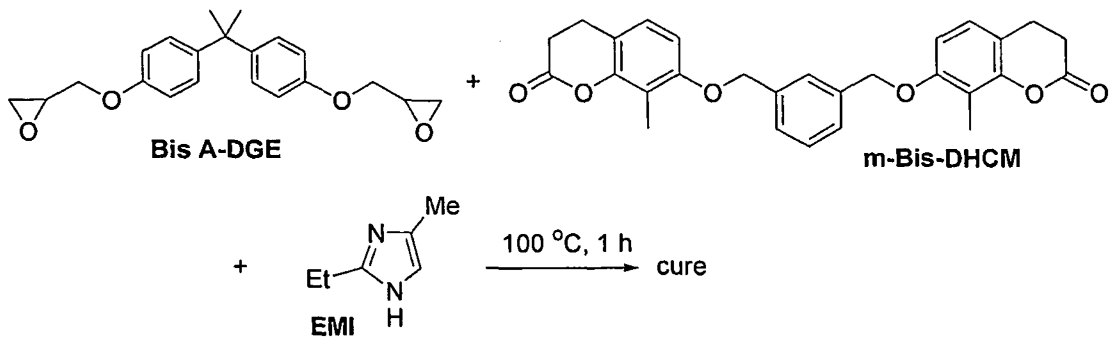

Bis A-DGE
m-Bis-DHCM
EMI

Comparative 2 (Formulation: Bis A-DGE + EMI)

No lactone and no monofunctional monomer were added. The ratio [epoxy group of Bis A-DGE] : [EMI] = 100 : 5.

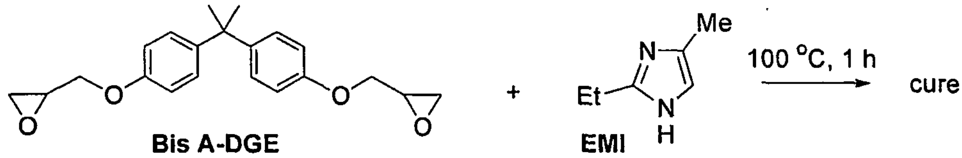

Bis A-DGE
EMI

The data for Example 2 and Comparative Example 2 is listed in Table 2.

Table 2. Properties of the curable formulations (cured at 100°C for 1 h)

| | Example 2 | Example 2-2 | Comparative Example 2 |
|---|---|---|---|
| $D_{before}$ (g/mL) | 1.174 | 1.189 | 1.156 |
| $D_{after}$ (9/ML) | 1.188 | 1.199 | 1.181 |
| volume shrinkage (%) | 1.2 | 0.82 | 2.2 |

Table 2 shows that the lack, of the bifunctional lactone of the invention, i.e. its replacement by additional Bis A-DGE, results in an increased volume shrinkage being more than 83.3 % higher (in relative numbers compared to Example 2).

Example 3 (Formulation: Bis A-DGE + DHCM + Hx3921 Hp)

BisA-DGE (9.02 g; 45 wt.-%), DHCM (3.10 g; 15 wt.-%) and Hx3921 Hp (which is an imidazol-based amine-hardener supplied by Asahi Kasei; 8.04 g; 40 wt.-%) were mixed and degassed under vacuum. The mixture was cured at 120 °C for 1 h. Shrinkage test and the other tests were carried out as for Example 1. Hx3921 Hp is a standard curing reagent, which contains adducts of imidazole and epoxide, which are further encapsulated in epoxy resins.

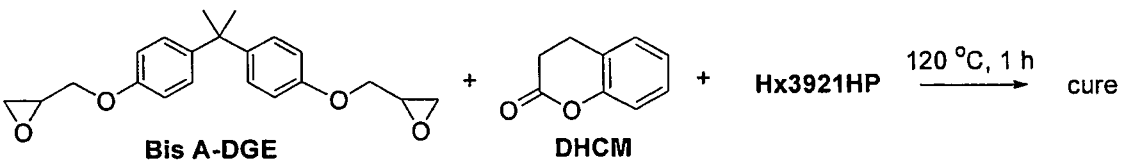

Bis A-DGE
DHCM

Comparative Example 3 (Formulation: Bis A-DGE + GPE + Hx3921Hp)

Instead of DHCM, the monofunctional epoxide GPE was used in a same weight ratio.

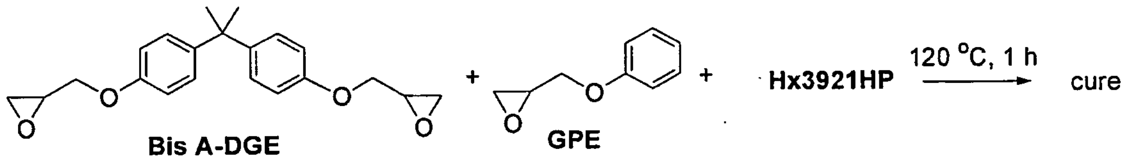


The data for Example 3 and Comparative Example 3 is listed in Table 3. This table shows that the lack, of DHCM in Comparative Example 3, i.e. its replacement by GPE, results in an increased volume shrinkage being 43.5 % higher (in relative numbers compared to Example 3).

Table 3. Properties of the curable formulations (cured at 120 °C for 1 h)

| | Example 3 | Comparative Example 3 |
|---|---|---|
| $D_{before}$ (9/mL) | 1.1784 | 1.1635 |
| $D_{after}$ (g/mL) | 1.2056 | 1.2034 |
| volume shrinkage (%) | 2.3 | 33 3.3 |
| $Td_{10}$ | 403 °C | 405 °C |
| Tg | 114 °C | 96 °C |

Example 4-1 (Formulation: Bis A-DGE + DHCM + Jeff-amine®400. at 120°C)

BisA-DGE (17.0 g; 50 mmol), DHCM (2.7 g; 18 mmol) and Jeff-amine400 (12.0 g; 30 mmol) were mixed and degassed under vacuum. The mixture was cured at 120 °C for 1 h. Shrinkage test was carried out in the same way as described for Example 1.

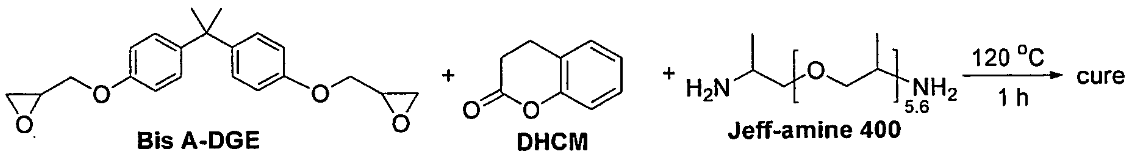


Example 4-2 (Formulation: Bis A-DGE + DHCM + Jeff-amine®400, at 50 °C)

The same formulation as for the example 4-1 was used and cured at 50°C for 24h.

Example 4-3 (Formulation: Bis A-DGE + DHCM + Jeff-amine®400, at 50 °C)

With using the same components as Example 4-1, a curable formulation with different feed ratio was prepared and cured. The curing conditions were the same as with example 4-2. Molar ratio [Bis A-DGE]:[DHCM]:[Jeff-amine 400] = 100: 15 : 57.5 mmol. Shrinkage test was carried out in the same way as described for Example 1.

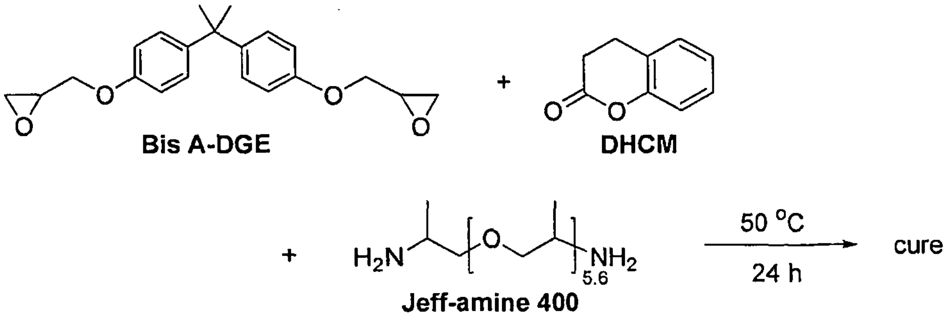

Bis A-DGE
DHCM
Jeff-amine 400

Example 4-4 (Formulation: Bis A-DGE + bislactone **3** + Jeff-amine®400, at 50 °C)

Instead of DHCM in the Example 4-3, the bifunctional DHCM derivative **3** was used. Molar ratio [Bis A-DGE]:[lactone moiety of **3**]:[Jeff-amine 400] = 100: 15 : 57.5 mmol. The curing conditions were the same as with example 4-2. Shrinkage test was carried out in the same way as described for Example 1.

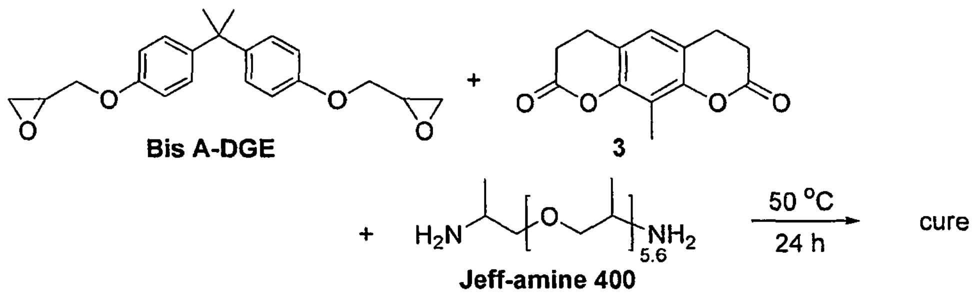

Bis A-DGE
3
Jeff-amine 400

Example 4-5 (Formulation: Bis A-DGE + bislactone **3** + Jeff-amine®400, at 50 °C)

With using the same components as Example 4-4, the feed molar ratio was varied to [Bis A-DGE]:[lactone moiety of 3]:[Jeff-amine 400] =100: 30 : 65 mmol. The curing conditions were the same as with example 4-2. Shrinkage test was carried out in the same way as described for Example 1.

Comparative Example 4-1 (Formulation: Bis A-DGE + GPE + Jeff-amine®400, at 120°C)

Instead of DHCM, the monofunctional epoxide GPE was used in a same amount.

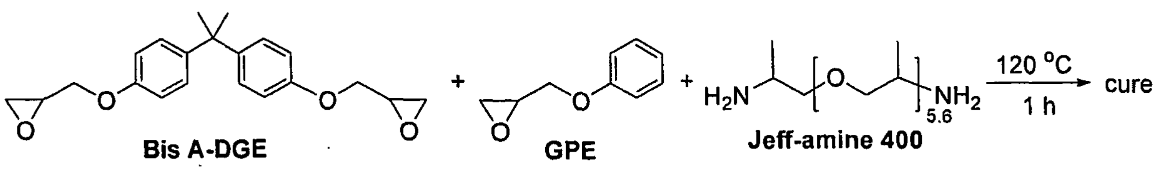

Bis A-DGE
GPE
Jeff-amine 400

Comparative Example 4-2 (Formulation: Bis A-DGE + GPE + Jeff-amine®400, at 50°C)

The same formulation as for the comparative example 4-1 was used and cured at 50 °C for 24 h.

Comparative Example 4-3

No lactone was added. Molar ratio [Bis A-DGE]:[Jeff-amine 400]=100:50. The curing conditions were the same

as with comparison example 4-2. The corresponding test results are listed in Table 4.

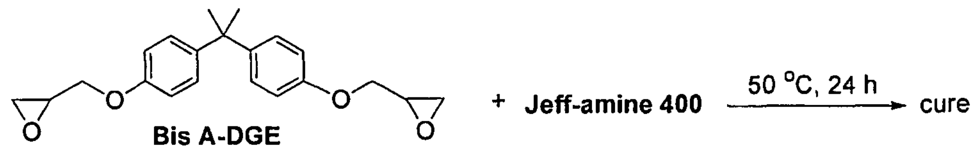


The datas for Examples 4-1 to 4-5 and Comparative Examples 4-1 to 4-3 are listed in Table 4. This table shows that the lack of DHCM in the Comparative Examples or its replacement by GPE, results in significantly increased volume shrinkage.

Table 4. Properties of the curable formulations

| | Ex 4-1 | Ex 4-2 | Ex 4-3 | Ex 4-4 | Ex 4-5 ; | Com.Ex.4-1 | Com.Ex.4-2 | Com.Ex.4-3 |
|---|---|---|---|---|---|---|---|---|
| $D_{before}$ (g/mL) | 1.096 | 1.096 | 1.089 | 1.100 | 1.109 | 1.077 | 1.077 | 1.080 |
| $D_{after}$ (g/mL) | 1.137 | 1.132 | 1.140 | 1.149 | 1.151 | 1.136 | 1.132 | 1.143 |
| volume shrinkage (%) | 3.6 | 3.1 | 4.5 | 4.3 | 3.6 | 5.2 | 4.8 | 5.5 |

These results support that DHCM derivatives exhibit their shrinkage suppression effect not only in epoxy-imidazole curing systems

<u>Example 5-1 (Formulation: Bis A-DGE + DHCM + Jeff-amine®400 + EMI)</u>

To the formulation of Example 4-3, EMI was added. Molar ratio [Bis A-DGE]:[DHCM]:[Jeff-amine 400]:[EMI] is 100: 15 :57.5: 3. Tests were carried out as for Example 1-1. The corresponding results are listed in Table 5.

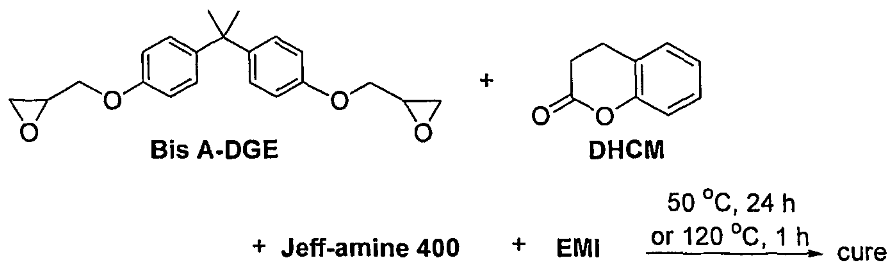


<u>Example 5-2 (Formulation: Bis A-DGE + DHCM + Jeff-amine®400 + EMI)</u>

Using the same components as Example 5-1, the curing reaction was carried out with molar ratio [Bis A-DGE]:[DHCM]:[Jeff amine 400]:[EMI] = 100: 30 : 65 : 3. Tests were carried out as for Example 1-1. The corresponding results are listed in Table 5.

<u>Example 5-3 (Formulation: Bis A-DGE + bislactone **3** + Jeff-amine®400 + EMI)</u>

To the formulation of Example 4-3, EMI was added. Molar ratio [Bis A-DGE]:[lactone moiety of 3]:[Jeff-amine 400]:[EMI] = 100: 15 : 57.5: 3. The corresponding test results are listed in Table 5.

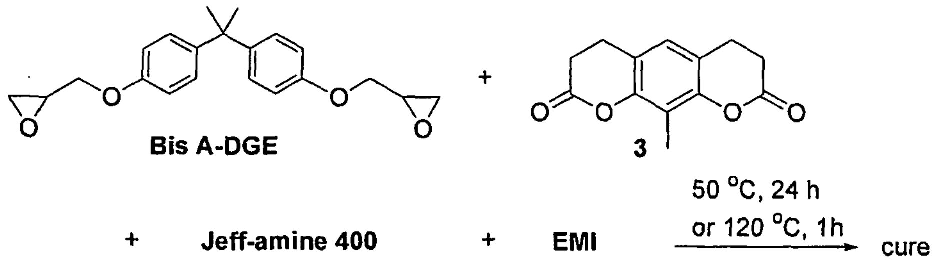


Example 5-4 (Formulation: Bis A-DGE + bislactone **3** + Jeff-amine®400 + EMI)

Using the same components as Example 5-1, the curing reaction was carried out with molar ratio [Bis A-DGE]:[lactone moiety of 3]:[Jeff-amine 400]:[EMI]=100:30:65:3. The corresponding results are listed in Table 5.

Comparative Example 5-1

No lactone was added. The ratio [Bis A-DGE]:[Jeff-amine 400]:[EMI] = 100:50: 3. The corresponding test results are listed in Table 5.

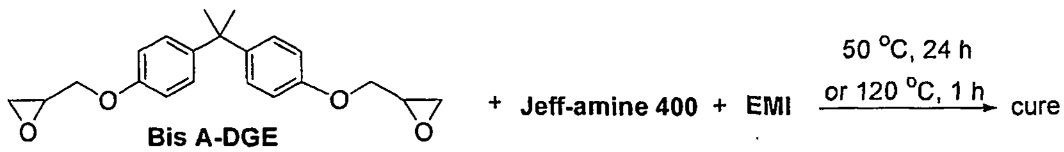


Table 5. Properties of the curable formulations.

| | Ex 5-1 | Ex 5-2 | Ex 5-3 | Ex 5-4 | Com.Ex.5-1 |
|---|---|---|---|---|---|
| $D_{before}$ (g/mL) | 1.089 | 1.100 | 1.100 | 1.109 | 1.081 |
| $D_{after}$ (g/mL) | 1.140 | 1.148 | 1.149 | 1.152 | 1.140 |
| | (1.141) | (1.146) | (1.149) | (1.151) | (1.144) |
| volume shrinkage (%) | 4.5 | 4.2 | 4.3 | 3.7 | 5.2 |
| | (4.5) | (4.0) | (4.3) | (3.6) | (5.5) |
| Tg (°C) | 26 | 24 | 30 | 30 | 41 |
| | (25) | (24) | (29) | (33) | (45) |
| $Td_5$ (°C) | 269 | 259 | 285 | 285 | 276 |
| | (272) | (256) | (283) | (275) | (277) |

Curing conditions: At 50 °C for 24 h. The figures in the parentheses are those for the curing reactions at 120°C for 1 h.

These results support that DHCM and its derivatives exhibits their shrinkage suppression effects in dual amine system.

Reduction of the curing temperature of amine-curing epoxy compositions of the present invention in the presence of primary and/or secondary amines as curing agents

A further advantage of the addition of the lactones used in the present invention is that the curing temperature can be reduced, i.e. the curing process can be performed in an energy-saving way, if the amine-type hardener is a primary and/or secondary amine. Figure 1 shows the differential scanning calorimetric profiles (DSC profiles) for the curing reactions of the formulations used in Example 4-1 and Comparative Example 4-1. By replacing GPE by DHCM,

the temperature of the maximum exotherm decreased by 23 °C.

## Claims

1. Use of at least one 6-membered lactone, which is condensed to an aromatic or heteroaromatic moiety, as shrinkage-suppressing agent in an amine-curing epoxy composition.

2. Use according to claim 1, wherein the aromatic or heteroaromatic moiety the 6-membered lactones (I) is condensed to, is a 5- to 7-membered aromatic or heteroaromatic ring, wherein the hetero atom or hetero atoms in the heteroaromatic ring are selected from nitrogen, oxygen or sulfur.

3. Use according to claim 2, wherein the aromatic or heteroaromatic moiety is a 6-membered ring.

4. Use according to claim 3, wherein the aromatic moiety is the benzene moiety.

5. Use according to any preceding claim, wherein the 6-membered lactone is condensed to a benzene moiety as the aromatic moiety, and which is described by the following general formula (I):

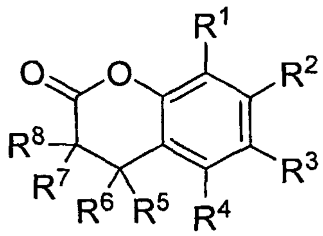

(I)

wherein

$R^1$ $R^2$, $R^3$, $R^4$, $R^5$, $R^6$, $R^7$ and $R^8$ are independently same or different and denote
hydrogen; hydroxyl;
a straight chain or branched alkyl group having 1 to 20 carbon atoms, preferably 1 to 12, most preferably 1 to 6 carbon atoms; or
aryl, alkaryl or aralkyl groups, with preferably 6 to 20 carbon atoms, which is directly bound to the aromatic or heteroaromatic moieties or 6-membered lactone moiety, or which is bound to those moieties by bridging atoms or bridging groups; and/or
neighboring residues $R^1$ and $R^2$; or $R^2$ and $R^3$; or $R^3$ and $R^4$ form 6-membered lactone moieties; and/or
one residue $R^1$, $R^2$, $R^3$ or $R^4$ is an aliphatic, cycloaliphatic or aromatic "bridging group" to a second lactone of general formula (I).

6. Use according to any preceding claim, wherein the 6-membered lactone is dihydrocoumarin or a substituted dihydrocoumarin.

7. Use according to any preceding claim, wherein the amine-curing epoxy composition comprises an epoxy component (II), which is represented by general formula (II):

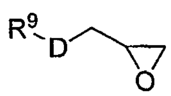

(II)

wherein

D denotes an oxygen or

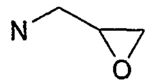

and $R^9$ is selected from the group consisting of a straight-chain or branched alkyl group with 1 to 18 carbon atoms; an aromatic or heteroaromatic group with 4 to 12 carbon atoms; a group with the structure

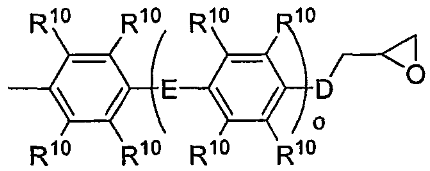

wherein all $R^{10}$ within the group are same or different and independently denote hydrogen or an alkyl group with 1 to 4 carbon atoms; and
o is 0 or 1; and
E is selected from the group consisting of a carbon-carbon single bond and $CR^{11}_2$ wherein $R^{11}$ is same or different and independently denotes hydrogen or an alkyl group with 1 to 4 carbon atoms; and
D is

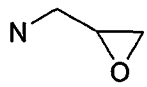 ;

or
$R^9$ is a group with the structure $R^{12}$-$SiR^{13}R^{14}R^{15}$
wherein $R^{13}$ and $R^{14}$ are the same or different, each of which denotes a straight-chain or branched alkoxy residue with 1 to 6 carbon atoms or an aryloxy or aralkyloxy residue,
$R^{15}$ is different or the same as $R^{13}$ or $R^{14}$ or an aliphatic residue, an amino residue, a halogen residue, an aromatic or heteroaromatic residue, or an araliphatic or heteroaraliphatic residue,
$R^{12}$ is a bridging group selected from the groups consisting of aliphatic, heteroaliphatic, araliphatic, heteroaraliphatic, aromatic and heteroaromatic groups.

**8.** Use according to any preceding claim, wherein the amine-curing epoxy composition comprises an amine-type hardener selected from the group consisting of primary amines, secondary amines and amine catalysts comprising tertiary amines, aromatic amines and heteroaromatic amines.

**9.** Use according to any preceding claim 8, wherein the heteroaromatic amine is imidazole or an alkylated imidazole, the tertiary amine is a heterocyclic tertiary amine and the primary amine is a polyoxyalkyleneamine.

**10.** An amine-curing epoxy composition comprising:

an epoxy resin;
an amine curative; and
at least one lactone compound comprising a 6-membered lactone ring, which is condensed to an aromatic or heteroaromatic moiety, provided that the composition does not contain dihydrocoumarin.

**11.** Composition according to claim 10, wherein the aromatic or heteroaromatic moiety the 6-membered lactone is condensed to, is a 5- to 7-membered aromatic or heteroaromatic ring, wherein the hetero atom or hetero atoms in the heteroaromatic ring are selected from the group consisting of nitrogen, oxygen or sulfur and wherein the aromatic or heteroaromatic moiety is a 6-membered ring, which in case of the aromatic moiety is the benzene moiety.

**12.** Composition according to claim 11, wherein the 6-membered lactone is condensed to a benzene moiety as the aromatic moiety, and which is described by the following general formula (I):

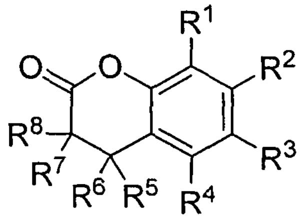

(I)

wherein

$R^1$, $R^2$, $R^3$, $R^4$, $R^5$, $R^6$, $R^7$ and $R^8$ are independently same or different and denote
hydrogen;
a straight chain or branched alkyl group having 1 to 20 carbon atoms, preferably 1 to 12, most preferably 1 to 6 carbon atoms; or
aryl, alkaryl or aralkyl groups, with preferably 6 to 20 carbon atoms, which is directly bound to the aromatic or heteroaromatic moieties or 6-membered lactone moiety, or which is bound to those moieties by bridging atoms or bridging groups; and/or
neighboring residues $R^1$ and $R^2$; or $R^2$ and $R^3$; or $R^3$ and $R^4$ form 6-membered lactone moieties; and/or
one residue $R^1$, $R^2$, $R^3$ or $R^4$ is an aliphatic, cycloaliphatic or aromatic "bridging group" to a second lactone of general formula (I).

**13.** Composition according to claim 12, wherein $R^5$, $R^6$, $R^7$ and $R^8$ are hydrogen and at least one of $R^1$, $R^2$, $R^3$ or $R^4$ is not hydrogen.

**14.** Composition according to any preceding claim, wherein the epoxy component (II), is represented by general formula (II):

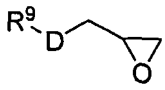

(II)

wherein

D denotes an oxygen or

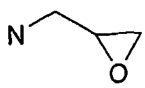

and $R^9$ is selected from the group consisting of a straight-chain or branched alkyl group with 1 to 18 carbon atoms; an aromatic or heteroaromatic group with 4 to 12 carbon atoms; a group with the structure

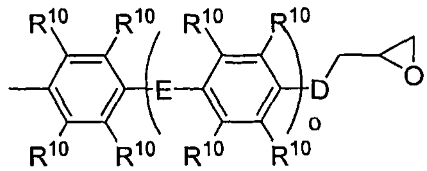

wherein all $R^{10}$ within the group are same or different and independently denote hydrogen or an alkyl group with 1 to 4 carbon atoms; and
o is 0 or 1; and
E is selected from the group consisting of a carbon-carbon single bond and $CR^{11}_2$ wherein $R^{11}$ is same or different and independently denotes hydrogen or an alkyl group with 1 to 4 carbon atoms; and
D is

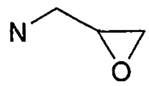

;

or
$R^9$ is a group with the structure $R^{12}$-$SiR^{13}R^{14}R^{15}$
wherein $R^{13}$ and $R^{14}$ are the same or different, each of which denotes a straight-chain or branched alkoxy residue with 1 to 6 carbon atoms or an aryloxy or aralkyloxy residue,
$R^{15}$ is different or the same as $R^{13}$ or $R^{14}$ or an aliphatic residue, an amino residue, a halogen residue, an aromatic or heteroaromatic residue, or an araliphatic or heteroaraliphatic residue,
$R^{12}$ is a bridging group selected from the groups consisting of aliphatic, heteroaliphatic, araliphatic, heteroaraliphatic, aromatic and heteroaromatic groups.

**15.** Composition according to any preceding claim, comprising an amine-type hardener selected from the group consisting of primary amines, secondary amines and amine catalysts comprising tertiary amines, aromatic amines and heteroaromatic amines.

**16.** Composition according to claim 15, wherein the heteroaromatic amine is imidazole or an alkylated imidazole, the tertiary amine is a heterocyclic tertiary amine and the primary amine is a polyoxyalkyleneamine.

**17.** Composition according to any of claims 10 to 16, wherein the molar ratios are as follows:

[epoxy groups (mol)] : [amine catalyst (mol)] = 99.9 : 0.1 to 80 : 20; and
[epoxy groups (mol)] : [lactone groups (mol)] = 99 : 1 to 30 : 70.

**18.** Composition according to any of claims 10 to 16, wherein the molar ratios are as follows:

[epoxy groups (mol)] : [active hydrogen in primary and/or secondary amine groups (mol)] = 90 : 10 to 30 : 70; and
[epoxy groups (mol)] : [lactone groups (mol)] = 99 : 1 to 30: 70.

**19.** Composition according to any of claims 10 to 18, wherein the epoxy resin comprises 20 % by weight to 100 % by weight, based on the total epoxy component, of a multifunctional epoxy resin and up to 20 % by weight of a monofunctional epoxy resin.

**20.** Use of the curable compositions, which are defined according to any of claims 10 to 19, in the preparation of and as sealants, adhesives coatings, and/or in electronic chip bonding and electronic chip underfills.

**21.** Use according to claim 20, whereby the sealants, adhesives and/or coatings are applied to and hardened on or between substrates selected from the group comprising metals, silicates, metal oxides, concrete, wood, electronic chip material, semiconductor material and organic polymers.

## Patentansprüche

1. Verwendung mindestens eines 6-gliedrigen Lactons, das an einen aromatischen oder heteroaromatischen Teil kondensiert ist, als die Schwindung unterdrückendes Mittel in einer aminhärtenden Epoxyzusammensetzung.

2. Verwendung nach Anspruch 1, wobei es sich bei dem aromatischen oder heteroaromatischen Teil, an den die 6-gliedrigen Lactone (I) kondensiert sind, um einen 5- bis 7-gliedrigen aromatischen oder heteroaromatischen Ring handelt, wobei das Heteroatom oder die Heteroatome in dem heteroaromatischen Ring aus Stickstoff, Sauerstoff oder Schwefel ausgewählt ist bzw. sind.

3. Verwendung nach Anspruch 2, wobei es sich bei dem aromatischen oder heteroaromatischen Teil um einen 6-gliedrigen Ring handelt.

4. Verwendung nach Anspruch 3, wobei es sich bei dem aromatischen Teil um den Benzolteil handelt.

5. Verwendung nach einem der vorhergehenden Ansprüche, wobei das 6-gliedrige Lacton an einen Benzolteil als der aromatische Teil kondensiert ist und wobei das Lacton mittels der folgenden allgemeinen Formel (I) beschrieben wird:

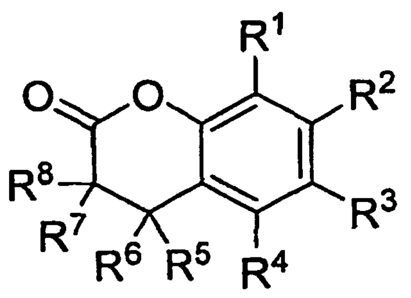

(I)

wobei

$R^1$, $R^2$, $R^3$, $R^4$, $R^5$, $R^6$, $R^7$ und $R^8$ unabhängig gleich oder verschieden sind und für Folgendes stehen:
Wasserstoff; Hydroxyl;
eine geradkettige oder verzweigte Alkylgruppe mit 1 bis 20 Kohlenstoffatomen, vorzugsweise 1 bis 12, am meisten bevorzugt 1 bis 6 Kohlenstoffatomen; oder
Aryl-, Alkaryl- oder Aralkylgruppen mit vorzugsweise 6 bis 20 Kohlenstoffatomen, die direkt an die aromatischen oder heteroaromatischen Teile oder den 6-gliedrigen Lactonteil gebunden sind oder die mittels Brückenatomen oder Brückengruppen an diese Teile gebunden sind; und/oder
benachbarte Reste $R^1$ und $R^2$ oder $R^2$ und $R^3$ oder $R^3$ und $R^4$ 6-gliedrige Lactonteile bilden und/oder
ein Rest $R^1$, $R^2$, $R^3$ oder $R^4$ eine aliphatische, cycloaliphatische oder aromatische "Brückengruppe" zu einem zweiten Lacton der allgemeinen Formel (I) ist.

6. Verwendung nach einem der vorhergehenden Ansprüche, wobei es sich bei dem 6-gliedrigen Lacton um Dihydrocumarin oder ein substituiertes Dihydrocumarin handelt.

7. Verwendung nach einem der vorhergehenden Ansprüche, wobei die aminhärtende Epoxyzusammensetzung eine Epoxykomponente (II) umfasst, die von der allgemeinen Formel (II) dargestellt wird:

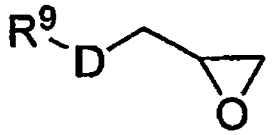

(II)

wobei

D für einen Sauerstoff oder

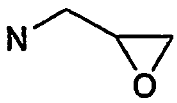

steht

und $R^9$ aus der Gruppe bestehend aus einer geradkettigen oder verzweigten Alkylgruppe mit 1 bis 18 Kohlenstoffatomen; einer aromatischen oder heteroaromatischen Gruppe mit 4 bis 12 Kohlenstoffatomen; einer Gruppe mit der Struktur

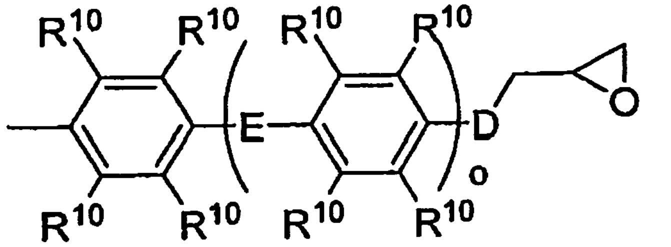

wobei alle $R^{10}$ in der Gruppe gleich oder verschieden sind und unabhängig für Wasserstoff oder eine Alkylgruppe mit 1 bis 4 Kohlenstoffatomen stehen, ausgewählt ist und

o 0 oder 1 ist und

E aus der Gruppe bestehend aus einer Kohlenstoff-Kohlenstoff-Einfachbindung und $CR^{11}_2$, wobei $R^{11}$ gleich oder verschieden sind und unabhängig für Wasserstoff oder eine Alkylgruppe mit 1 bis 4 Kohlenstoffatomen stehen, ausgewählt ist und

D

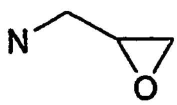

ist oder

$R^9$ eine Gruppe mit der Struktur $R^{12}$-$SiR^{13}R^{14}R^{15}$ ist,

wobei $R^{13}$ und $R^{14}$ gleich oder verschieden sind, wobei jedes für einen geradkettigen oder verzweigten Alkoxyrest mit 1 bis 6 Kohlenstoffatomen oder einen Aryloxy- oder Aralkyloxyrest steht,

$R^{15}$ unterschiedlich oder mit $R^{13}$ oder $R^{14}$ identisch oder ein aliphatischer Rest, ein Aminorest, ein Halogenrest, ein aromatischer oder heteroaromatischer Rest oder ein araliphatischer oder heteroaraliphatischer Rest ist,

$R^{12}$ eine Brückengruppe ist, die aus den Gruppen bestehend aus aliphatischen, heteroaliphatischen, araliphatischen, heteroaraliphatischen, aromatischen und heteroaromatischen Gruppen ausgewählt ist.

**8.** Verwendung nach einem der vorhergehenden Ansprüche, wobei die aminhärtende Epoxyzusammensetzung einen Härter vom Amintyp umfasst, der aus der Gruppe bestehend aus primären Aminen, sekundären Aminen und Aminkatalysatoren, die tertiäre Amine, aromatische Amine und heteroaromatische Amine umfassen, ausgewählt ist.

**9.** Verwendung nach vorhergehendem Anspruch 8, wobei es sich bei dem heteroaromatischen Amin um Imidazol oder ein alkyliertes Imidazol handelt, es sich bei dem tertiären Amin um ein heterocyclisches tertiäres Amin handelt und es sich bei dem primären Amin um ein Polyoxyalkylenamin handelt.

**10.** Aminhärtende Epoxyzusammensetzung, die Folgendes umfasst:

ein Epoxidharz;
ein Aminhärtungsmittel und
mindestens eine Lactonverbindung, die einen 6-gliedrigen Lactonring umfasst, der an einen aromatischen oder heteroaromatischen Teil kondensiert ist, vorausgesetzt, dass die Zusammensetzung kein Dihydrocumarin enthält.

**11.** Zusammensetzung nach Anspruch 10, wobei es sich bei dem aromatischen oder heteroaromatischen Teil, an den das 6-gliedrige Lacton kondensiert sind, um einen 5- bis 7-gliedrigen aromatischen oder heteroaromatischen Ring handelt, wobei das Heteroatom oder die Heteroatome in dem heteroaromatischen Ring aus Stickstoff, Sauerstoff oder Schwefel ausgewählt ist bzw. sind und wobei es sich bei dem aromatischen oder heteroaromatischen Teil um einen 6-gliedrigen Ring handelt, wobei es sich in diesem Fall bei dem aromatischen Teil um den Benzolteil handelt.

**12.** Zusammensetzung nach Anspruch 11, wobei das 6-gliedrige Lacton an einen Benzolteil als der aromatische Teil kondensiert ist und wobei das Lacton mittels der folgenden allgemeinen Formel (1) beschrieben wird:

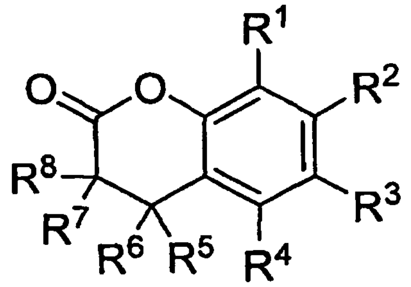

(I)

wobei $R^1$, $R^2$, $R^3$, $R^4$, $R^5$, $R^6$, $R^7$ und $R^8$ unabhängig gleich oder verschieden sind und für Folgendes stehen:
Wasserstoff;
eine geradkettige oder verzweigte Alkylgruppe mit 1 bis 20 Kohlenstoffatomen, vorzugsweise 1 bis 12, am meisten bevorzugt 1 bis 6 Kohlenstoffatomen; oder
Aryl-, Alkaryl- oder Aralkylgruppen mit vorzugsweise 6 bis 20 Kohlenstoffatomen, die direkt an die aromatischen oder heteroaromatischen Teile oder den 6-gliedrigen Lactonteil gebunden sind oder die mittels Brückenatomen oder Brückengruppen an diese Teile gebunden sind; und/oder
benachbarte Reste $R^1$ und $R^2$ oder $R^2$ und $R^3$ oder $R^3$ und $R^4$ 6-gliedrige Lactonteile bilden und/oder
ein Rest $R^1$, $R^2$, $R^3$ oder $R^4$ eine aliphatische, cycloaliphatische oder aromatische "Brückengruppe" zu einem zweiten Lacton der allgemeinen Formel (I) ist.

**13.** Zusammensetzung nach Anspruch 12, wobei $R^5$, $R^6$, $R^7$ und $R^8$ Wasserstoff sind und mindestens eines von $R^1$, $R^2$, $R^3$ und $R^4$ nicht Wasserstoff ist.

**14.** Zusammensetzung nach einem der vorhergehenden Ansprüche, wobei die Epoxykomponente (II) von der allgemeinen Formel (II) dargestellt wird:

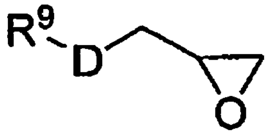

(II)

wobei

D für einen Sauerstoff oder

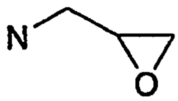

steht
und $R^9$ aus der Gruppe bestehend aus einer geradkettigen oder verzweigten Alkylgruppe mit 1 bis 18 Kohlenstoffatomen; einer aromatischen oder heteroaromatischen Gruppe mit 4 bis 12 Kohlenstoffatomen; einer Gruppe mit der Struktur

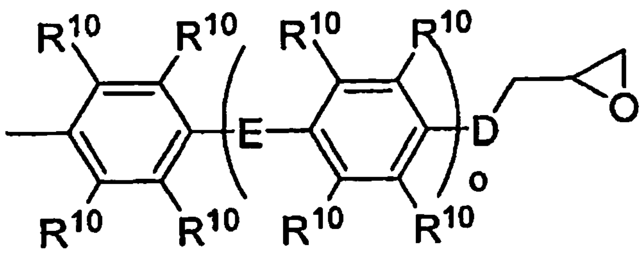

wobei alle $R^{10}$ in der Gruppe gleich oder verschieden sind und unabhängig für Wasserstoff oder eine Alkylgruppe mit 1 bis 4 Kohlenstoffatomen stehen, ausgewählt ist und
o 0 oder 1 ist und
E aus der Gruppe bestehend aus einer Kohlenstoff-Kohlenstoff-Einfachbindung und $CR^{11}_2$, wobei $R^{11}$ gleich oder verschieden sind und unabhängig für Wasserstoff oder eine Alkylgruppe mit 1 bis 4 Kohlenstoffatomen stehen, ausgewählt ist und
D

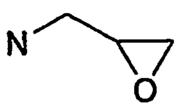

ist oder
$R^9$ eine Gruppe mit der Struktur $R^{12}$-$SiR^{13}R^{14}R^{15}$ ist,
wobei $R^{13}$ und $R^{14}$ gleich oder verschieden sind, wobei jedes für einen geradkettigen oder verzweigten Alkoxyrest mit 1 bis 6 Kohlenstoffatomen oder einen Aryloxy- oder Aralkyloxyrest steht,
$R^{15}$ unterschiedlich oder mit $R^{13}$ oder $R^{14}$ identisch oder ein aliphatischer Rest, ein Aminorest, ein Halogenrest, ein aromatischer oder heteroaromatischer Rest oder ein araliphatischer oder heteroaraliphatischer Rest ist,
$R^{12}$ eine Brückengruppe ist, die aus den Gruppen bestehend aus aliphatischen, heteroaliphatischen, araliphatischen, heteroaraliphatischen, aromatischen und heteroaromatischen Gruppen ausgewählt ist.

**15.** Zusammensetzung nach einem der vorhergehenden Ansprüche, die einen Härter vom Amintyp umfasst, der aus der Gruppe bestehend aus primären Aminen, sekundären Aminen und Aminkatalysatoren, die tertiäre Amine, aromatische Amine und heteroaromatische Amine umfassen, ausgewählt ist.

**16.** Zusammensetzung nach Anspruch 15, wobei es sich bei dem heteroaromatischen Amin um Imidazol oder ein alkyliertes Imidazol handelt, es sich bei dem tertiären Amin um ein heterocyclisches tertiäres Amin handelt und es sich bei dem primären Amin um ein Polyoxyalkylenamin handelt.

**17.** Zusammensetzung nach einem der Ansprüche 10 bis 16, wobei die Molverhältnisse wie folgt sind:

[Epoxygruppen (mol)]:[Aminkatalysator (mol)] = 99,9:0,1 bis 80:20 und
[Epoxygruppen (mol)]:[Lactongruppen (mol)] = 99:1 bis 30:70.

**18.** Zusammensetzung nach einem der Ansprüche 10 bis 16, wobei die Molverhältnisse wie folgt sind:

[Epoxygruppen (mol)]:[aktiver Wasserstoff in primären und/oder sekundären Amingruppen (mol)] = 90:10 bis 30:70 und
[Epoxygruppen (mol)]:[Lactongruppen (mol)] = 99:1 bis 30:70.

**19.** Zusammensetzung nach einem der Ansprüche 10 bis 18, wobei das Epoxidharz 20 Gew.-% bis 100 Gew.-%, bezogen auf die gesamte Epoxykomponente, eines polyfunktionellen Epoxidharzes und bis zu 20 Gew.-% eines monofunktionellen Epoxidharzes umfasst.

**20.** Verwendung der härtbaren Zusammensetzungen, die nach einem der Ansprüche 10 bis 19 definiert sind, bei der Herstellung von Dichtmitteln, Klebstoffen, Überzügen und/oder bei der Verbindung von elektronischen Chips und Unterfüllungen von elektronischen Chips.

**21.** Verwendung nach Anspruch 20, wobei die Dichtmittel, Klebstoffe und/oder Überzüge auf Substrate, die aus der Gruppe ausgewählt sind, die Metalle, Silikate, Metalloxide, Beton, Holz, Material für elektronische Chips, Material für Halbleiter und organische Polymere umfasst, aufgebracht und auf oder zwischen diesen Substraten gehärtet werden.

**Revendications**

**1.** Utilisation d'au moins une lactone à 6 chaînons, qui est condensée en une fraction aromatique ou hétéroaromatique, en tant qu'agent suppresseur de retrait dans une composition époxy à agent durcisseur amine.

**2.** Utilisation selon la revendication 1, dans laquelle la fraction aromatique ou hétéroaromatique en laquelle la lactone à 6 chaînons (1) est condensée, est un noyau aromatique ou hétéroaromatique de 5 à 7 chaînons, dans laquelle l'hétéroatome ou les hétéroatomes dans le noyau hétéroaromatique sont choisis parmi l'atome d'azote, d'oxygène ou de soufre.

**3.** Utilisation selon la revendication 2, dans laquelle la fraction aromatique ou hétéroaromatique est un noyau à 6 chaînons.

**4.** Utilisation selon la revendication 3, dans laquelle la fraction aromatique est la fraction benzène.

**5.** Utilisation selon l'une des revendications précédentes, dans laquelle la lactone à 6 chaînons est condensée en une fraction benzène en tant que fraction aromatique, et qui est décrite par la formule générale suivante (I) :

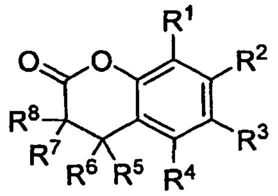

(I)

dans laquelle $R^1$, $R^2$, $R^3$, $R^4$, $R^5$, $R^6$, $R^7$ et $R^8$ sont indépendamment identiques ou différents et désignent un atome d'hydrogène; un groupe hydroxyle;
un groupe alkyle à chaîne linéaire ou ramifiée ayant de 1 à 20 atomes de carbone, de préférence 1 à 12, de manière tout particulièrement préférée 1 à 6 atomes de carbone; ou
des groupes aryle, alkaryle ou aralkyle, ayant de préférence 6 à 20 atomes de carbone, qui est directement liée aux fractions aromatiques ou hétéroaromatiques, ou à la fraction lactone de 6 chaînons, ou qui est liée à ces fractions par des atomes de pontage ou groupes de pontage; et/ou les radicaux voisins $R^1$ et $R^2$ ou $R^2$ et $R^3$ ou $R^3$ et $R^4$ forment des fractions lactone de 6 chaînons; et/ou un radical $R^1$, $R^2$, $R^3$ ou $R^4$, est un groupe aliphatique, cycloaliphatique, ou aromatique de pontage vers une deuxième lactone de formule générale (I).

6. Utilisation selon l'une des revendications précédentes, dans laquelle la lactone de 6 chaînons est la dihydrocoumarine ou une dihydrocoumarine substituée.

7. Utilisation selon l'une des revendications précédentes, dans laquelle la composition époxy à agent durcisseur amine comprend un composant époxy (II), qui est représenté par la formule générale (II) :

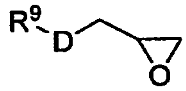

dans laquelle

D désigne un atome d'oxygène ou

(II)

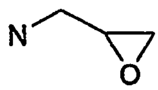

et $R^9$ est choisi dans le groupe formé par un groupe alkyle à chaîne droite ou ramifié ayant de 1 à 18 atomes de carbone; un groupe aromatique ou hétéroaromatique ayant de 4 à 12 atomes de carbone; un groupe ayant la structure

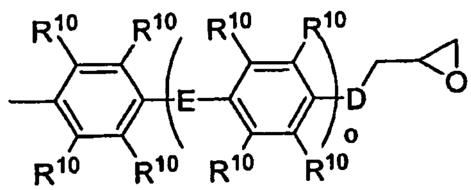

dans laquelle tous les $R^{10}$ dans le groupe sont identiques ou différents et désignent indépendamment un atome

d'hydrogène ou un groupe alkyle ayant 1 à 4 atomes de carbone; et
o vaut 0 ou 1; et
E est choisi dans le groupe formé par une simple liaison carbone-carbone et $CR^{11}_2$, dans lequel $R^{11}$ est identique ou différent et désigne indépendamment un atome d'hydrogène ou un groupe alkyle ayant 1 à 4 atomes de carbone; et
D représente

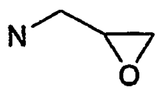
;

ou
$R^9$ est un groupe ayant la structure $R^{12}$-Si $R^{13}R^{14}R^{15}$
dans lequel $R^{13}$ et $R^{14}$ sont identiques ou différents, chacun d'entre eux désigne un radical alcoxy à chaîne droite ou ramifié ayant 1 à 6 atomes de carbone ou un radical aryloxy ou aralkyloxy,
$R^{15}$ est différent ou identique à $R^{13}$ ou $R^{14}$ ou un radical aliphatique, un radical amino, un radical halogéno, un radical aromatique ou hétéroaromatique, ou un radical araliphatique ou hétéroaraliphatique,
$R^{12}$ est un groupe de pontage choisi dans le groupe formé par les groupes aliphatiques, hétéroaliphatiques, araliphatiques, hétéroaraliphatiques, aromatiques et hétéroaromatiques.

**8.** Utilisation selon l'une des revendications précédentes, dans laquelle la composition époxy à agent durcisseur amine comprend un durcisseur du type amine choisi dans le groupe formé par les amines primaires, les amines secondaires, et les catalyseurs à base d'amines comprenant les amines tertiaires, les amines aromatiques et les amines hétéroaromatiques.

**9.** Utilisation selon la revendication 8, dans laquelle l'amine hétéroaromatique est l'imidazole ou un imidazole alkylé, l'amine tertiaire est une amine tertiaire hétérocyclique et l'amine primaire est une polyoxyalkylèneamine.

**10.** Une composition époxy à agent durcisseur amine comprenant :

une résine époxy;
un durcisseur amine; et
au moins un composé lactone comprenant un noyau lactone de 6 chaînons, qui est condensé en une fraction aromatique ou hétéroaromatique à condition que la composition ne contienne pas de dihydrocoumarine.

**11.** Composition selon la revendication 10, dans laquelle la fraction aromatique ou hétéroaromatique en laquelle la lactone à 6 chaînons (1) est condensée, est un noyau aromatique ou hétéroaromatique de 5 à 7 chaînons, dans laquelle l'hétéroatome ou les hétéroatomes dans le noyau hétéroaromatique sont choisis dans le groupe formé par l'atome d'azote, l'oxygène ou le soufre et dans laquelle la fraction aromatique ou hétéroaromatique est un noyau à 6 chaînons, qui, dans le cas de la fraction aromatique, est la fraction benzène.

**12.** Composition selon la revendication 11, dans laquelle la lactone à 6 chaînons est condensée en une fraction benzène en tant que fraction aromatique, et qui est décrite par la formule générale suivante (I) :

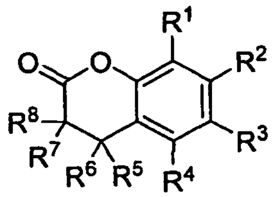

**(I)**

dans laquelle

$R^1$, $R^2$, $R^3$, $R^4$, $R^5$, $R^6$, $R^7$ et $R^8$ sont indépendamment identiques ou différents et désignent

un atome d'hydrogène;
un groupe alkyle à chaîne linéaire ou ramifiée ayant de 1 à 20 atomes de carbone, de préférence 1 à 12, de manière tout particulièrement préférée 1 à 6 atomes de carbone; ou
des groupes aryle, alkaryle ou aralkyle, ayant de préférence 6 à 20 atomes de carbone, qui est directement liée aux fractions aromatiques ou hétéroaromatiques, ou à la fraction lactone de 6 chaînons, ou qui est liée à ces fractions par des atomes de pontage ou groupes de pontage; et/ou les radicaux voisins $R^1$ et $R^{2;}$ ou $R^2$ et $R^{3;}$ ou $R^3$ et $R^4$ forment des fractions lactone de 6 chaînons; et/ou un radical $R^1$, $R^2$, $R^3$ ou $R^4$, est un groupe aliphatique, cycloaliphatique, ou aromatique de pontage vers une deuxième lactone de formule générale (I).

**13.** Composition selon la revendication 12, dans laquelle $R^5$, $R^6$, $R^7$ et $R^8$ représentent un atome d'hydrogène et au moins l'un de $R^1$, $R^2$, $R^3$ ou $R^4$ n'est pas un atome d'hydrogène.

**14.** Composition selon l'une des revendications précédentes, dans laquelle le composant époxy (II) est représenté par la formule générale (II) :

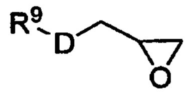

dans laquelle

D désigne un atome d'oxygène ou

**(II)**

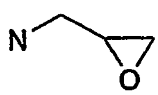

et $R^9$ est choisi dans le groupe formé par un groupe alkyle à chaîne droite ou ramifié ayant de 1 à 18 atomes de carbone; un groupe aromatique ou hétéroaromatique ayant de 4 à 12 atomes de carbone; un groupe ayant la structure

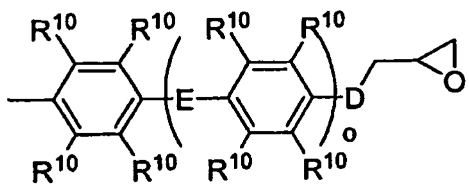

dans laquelle tous les $R^{10}$ dans le groupe sont identiques ou différents et désignent indépendamment un atome d'hydrogène ou un groupe alkyle ayant 1 à 4 atomes de carbone; et
o vaut 0 ou 1; et
E est choisi dans le groupe formé par une simple liaison carbone-carbone et $CR^{11}_2$, dans lequel $R^{11}$ est identique ou différent et désigne indépendamment un atome d'hydrogène ou un groupe alkyle ayant 1 à 4 atomes de carbone; et
D représente

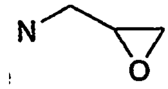 ;

ou
$R^9$ est un groupe ayant la structure $R^{12}$-Si $R^{13}R^{14}R^{15}$
dans lequel $R^{13}$ et $R^{14}$ sont identiques ou différents, chacun d'entre eux désigne un radical alcoxy à chaîne droite ou ramifié ayant 1 à 6 atomes de carbone ou un radical aryloxy ou aralkyloxy,
$R^{15}$ est différent ou identique à $R^{13}$ ou $R^{14}$ ou un radical aliphatique, un radical amino, un radical halogéno, un radical aromatique ou hétéroaromatique, ou un radical araliphatique ou hétéroaraliphatique,
$R^{12}$ est un groupe de pontage choisi dans le groupe formé par les groupes aliphatiques, hétéroaliphatiques, araliphatiques, hétéroaraliphatiques, aromatiques et hétéroaromatiques.

**15.** Composition selon l'une des revendications précédentes, comprenant un durcisseur de type amine choisi dans le groupe formé par les amines primaires, les amines secondaires, et les catalyseurs à base d'amine, comprenant les amines tertiaires, les amines aromatiques et les amines hétéroaromatiques.

**16.** Composition selon la revendication 15, dans laquelle l'amine hétéroaromatique est l'imidazole ou un imidazole alkylé, l'amine tertiaire est une amine tertiaire hétérocyclique et l'amine primaire est une polyoxyalkylèneamine.

**17.** Composition selon l'une quelconque des revendications 10 à 16, dans laquelle les rapports molaires sont les suivants :

[groupes époxy (en moles)] : [catalyseur amine (en moles)] = 99,9:0,1 à 80:20; et
[groupes époxy (en moles)] : [groupe lactone (en moles)] = 99:1 à 30:70.

**18.** Composition selon l'une quelconque des revendications 10 à 16, dans laquelle les rapports molaires sont les suivants :

[groupes époxy (en moles)] : [hydrogène actif dans les groupes amines primaires et/ou secondaires (en moles)] = 90 :10 à 30:70; et
[groupes époxy (en moles)] : [groupes lactone (en moles)] = 99:1 à 30:70.

**19.** Composition selon l'une quelconque des revendications 10 à 18, dans laquelle la résine époxy comprend 20% en poids jusqu'à 100% en poids, par rapport au composant époxy total, d'une résine époxy multifonctionnelle et jusqu'à 20% en poids d'une résine époxy monofonctionnelle.

**20.** Utilisation des compositions durcissables, qui sont définies selon l'une quelconque des revendications 10 à 19, dans la préparation de produits de scellement, d'adhésifs, de revêtements, ou sous la forme de ces derniers et/ou dans le collage de puces électroniques et les garnitures de remplissage de puces électroniques.

**21.** Utilisation selon la revendication 20, par le biais de laquelle les produits de scellement, les adhésifs et/ou les revêtements sont appliqués à, et durcis sur ou entre des substrats choisis dans le groupe comprenant les métaux, les silicates, les oxydes métalliques, le béton, le bois, la matière de puce électronique, la matière semi-conductrice et les polymères organiques.

Figure 1

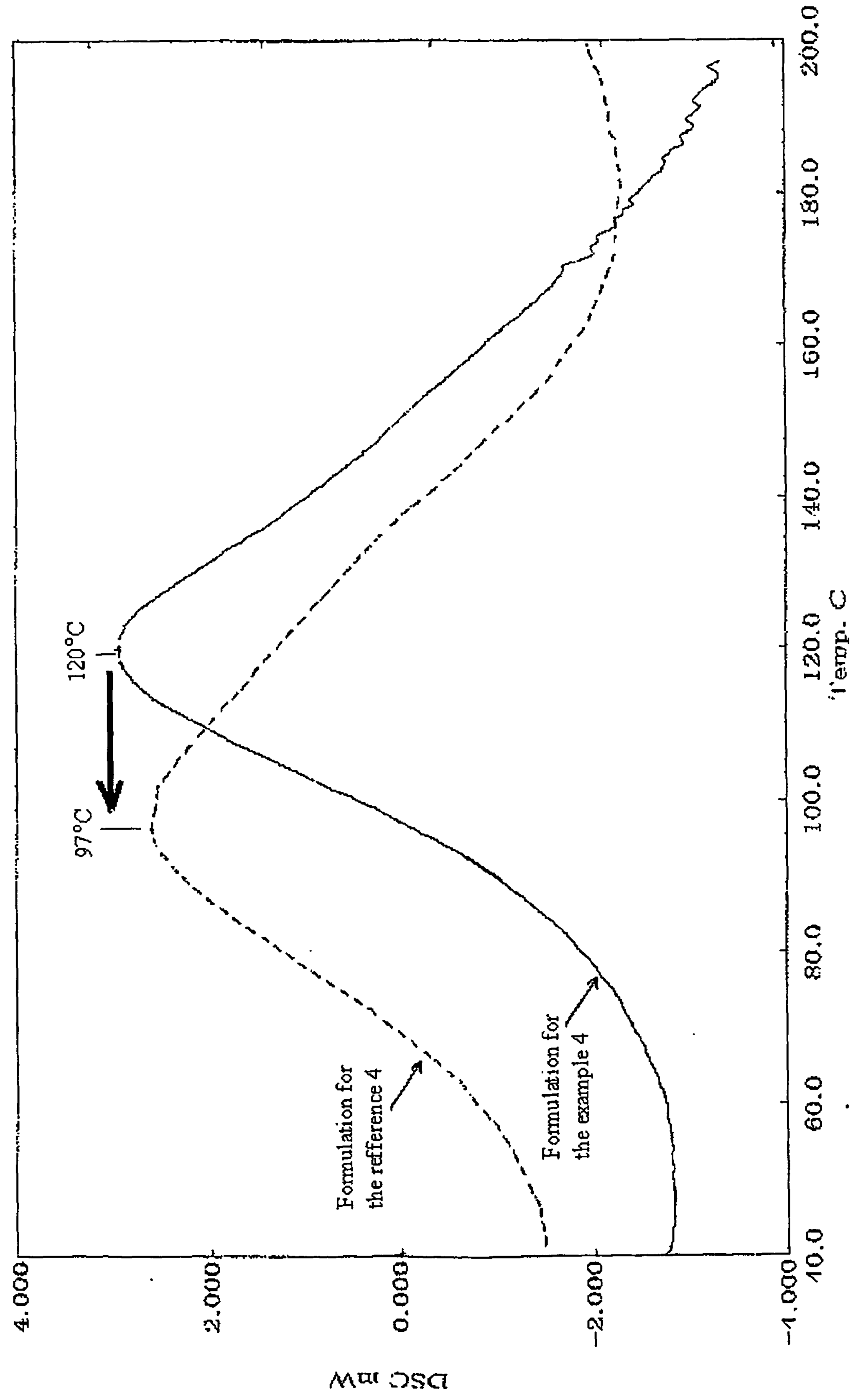
DSC mW
4.000
2.000
0.000
-2.000
-1.000
10.0
60.0
80.0
100.0
120.0
140.0
160.0
180.0
200.0
Temp. C
97°C
120°C
Formulation for the refference 4
Formulation for the example 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003238659 A
- JP 11158350 A


### Non-patent literature cited in the description


- **MARX. J. N. et al.** *J. Heterocyclic Chem.,* 1975, vol. 12 (2), 417